# EUROPÄISCHE PATENTANMELDUNG

(11) **EP 1 577 546 A2**
(43) Veröffentlichungstag der Anmeldung: **21.09.2005**
(21) Anmeldenummer: 05005915.3
(22) Anmeldetag: 18.03.2005
(51) Int. Cl.: F03D 1/06

(54) **Windkraftanlage zur Umwandlung von Windenergie in andere Energieformen**

(30) Priorität: 18.03.2004 DE 102004013702
(71) Anmelder: Valett, Klaus, 25474 Ellerbek (DE)
(72) Erfinder: Valett, Jochen, 25358 Horst/Holstein (DE)
(74) Vertreter: Seemann, Ralph

(57) **Zusammenfassung**

Die Erfindung betrifft eine Windkraftanlage (2) zur Umwandlung von Windenergie in andere Energieformen, umfassend einen Turm (3) mit einem Turmkopf (5) mit einer durch Wind antreibbaren Primärturbine (6), umfassend eine horizontale Primärturbinenachse (7) und wenigstens ein Turbinenblatt (10), das über einen Primärturbinenkopf (9) mit der Primärturbinenachse (7) verbunden ist. Weiter betrifft die Erfindung ein Turbinenblatt (11), sowie die Verwendung einer Windkraftanlage (2).

Die erfindungsgemäße Windkraftanlage (2) zeichnet sich dadurch aus, dass eine Sekundärturbine (11) vorgesehen ist.

## Beschreibung

Die Erfindung betrifft eine Windkraftanlage zur Umwandlung von Windenergie in andere Energieformen, umfassend einen Turm mit einem Turmkopf, mit einer durch Wind antreibbaren Primärturbine, umfassend eine horizontale Primärturbinenachse und wenigstens ein Turbinenblatt, das über einen Primärturbinenkopf mit der Primärturbinenachse verbunden ist. Weiter betrifft die Erfindung ein Turbinenblatt, sowie die Verwendung der Windkraftanlage.

Windkraftanlagen, bestehend aus einem Turm, einem Turmkopf, einer großen windgetriebenen Turbine und einem im Turmkopf angeordneten elektrischen Generator, sind weit verbreitet. Die Turbine wird durch Wind in Rotation versetzt, die Rotationsbewegung wird über die Turbinenwelle ggf. über ein Getriebe an einen elektrischen Generator weitergegeben, welcher die Rotationsenergie in elektrischen Strom umwandelt.

Die bei diesen Konstruktionen verwendeten Generatoren und Getriebe sind sehr massiv und stellen hohe Anforderungen an die Steifigkeit der Turmkonstruktion. So ist in Sonne Wind & Wärme 9/2003, S. 80, ausgeführt, dass die Turmkopfmassen von Windenergieanlagen im Leistungsbereich von 3,0 bis 5,0 MW zwischen 100 und 500 t betragen. Das hohe Gewicht erschwert außerdem die Montage, da sehr aufwändige Kräne für die Montage des Turmkopfs auf dem Turm benötigt werden. Im Betrieb sind Getriebeschäden außerdem für einen großen Teil der Stillstandszeiten von Windkraftanlagen verantwortlich. Die Positionierung von Generator und Getriebe im Turmkopf bedingt weiterhin, dass Wartungsarbeiten sehr zeitintensiv sind, da sie das Erklettern des Turmes erfordern und durch die notwendige kompakte Bauweise von Generator und Getriebe erschwert werden.

Nach der Betz'schen Formel steigt die verfügbare Windenergie linear mit der von der Turbine überstrichenen Fläche an, jedoch mit der dritten Potenz der Anströmgeschwindigkeit, welche bei herkömmlichen Windkraftanlagen konstruktionsbedingt gleich der herrschenden Windgeschwindigkeit ist.

Ein weiteres Merkmal von Windkraftanlagen ist die durch die Formung der Turbinenblätter hervorgerufene Lärmbelastung. Bei hohen Umfangsgeschwindigkeiten erzeugt insbesondere die Turbinenblattspitze starke Turbulenzen in der Luft. Diese Turbulenzen sind direkt für die zur Lärmbelastung führenden Geräuschentwicklung verantwortlich, welche durch Begrenzung der Rotordrehzahl gering gehalten werden muss.

Der Erfindung liegt die Aufgabe zugrunde, eine Weiterentwicklung einer Windkraftanlage bereit zu stellen, welche das auf dem Turm lastende Gewicht verringert und gegenüber konventionellen Windkraftanlagen einen andersartigen konstruktiven Aufbau zur Leistungsentnahme gestattet.

Diese Aufgabe wird durch eine Windkraftanlage gelöst, umfassend einen Turm mit einem Turmkopf, mit einer durch Wind antreibbaren Primärturbine, umfassend eine horizontale Primärturbinenachse und wenigstens ein Turbinenblatt, das über einen Primärturbinenkopf mit der Primärturbinenachse verbunden ist, wobei eine Sekundärturbine vorgesehen ist. Es ist vorteilhaft, die Sekundärturbine am Turbinenblatt der Primärturbine anzuordnen.

Durch die Drehung des Turbinenblatts wird die Sekundärturbine mit der Umfangsgeschwindigkeit des Primärturbinenblatts am Ort der Sekundärturbine durch die Luft bewegt. Im Rahmen der Erfindung wird unter dem Begriff "Windenergie" diejenige Energie verstanden, welche aus der Relativbewegung von Luft und einer Primär- oder Sekundärturbine gewonnen werden kann, unabhängig davon, ob sich die Sekundärturbine durch die Luft bewegt oder die Luft in Form von Wind die stationäre Primärturbine antreibt.

Bei Primärturbinen ist das Verhältnis von Umfangsgeschwindigkeit zur Windgeschwindigkeit, die Schnelllaufzahl, üblicherweise größer als 2. Entsprechend ist die Relativgeschwindigkeit v_{rel,2} zwischen der Sekundärturbine und der Luft, durch die die Sekundärturbine bewegt wird, mehr als doppelt so groß wie Windgeschwindigkeit v_{wind}.

Gegenüber der Erhöhung der verfügbaren Windenergie mit der dritten Potenz der Windgeschwindigkeit steigt die Leistung einer Turbine nur linear mit der von der Turbine überstrichenen Fläche. Dementsprechend kann bei gleicher Leistung die Sekundärturbine wesentlich kleiner dimensioniert sein als die Primärturbine.

In einer Weiterbildung der Windkraftanlage ist vorgesehen, dass die Sekundärturbine mit einer Hydraulikpumpe verbunden ist. Die Verwendung einer Hydraulikpumpe hat gegenüber der üblichen Verwendung von elektrischen Generatoren und Getrieben in Windkraftanlagen den Vorteil, dass bei gleicher Leistung eine Gewichtsersparnis um einen Faktor 10 erreichbar ist. Dadurch verringern sich die Lasten auf dem Turm um ein Vielfaches. Die verringerte Turmkopfmasse, d.h. die Masse des Turmkopfes, der Primärturbine und der Sekundärturbine, führt zu einer höheren dynamischen Steifigkeit der Windkraftanlage bei sinkendem Materialaufwand.

Im hydraulischen System kommen hydraulische Flüssigkeiten zur Anwendung. Dafür kommen mit Frostschutzmittel versetztes Wasser oder hydraulische Öle in Frage.

Eine einfach zu realisierende Ausbildung ist dadurch gekennzeichnet, dass zusätzlich zu einem Turbinenblatt ein Gegengewicht ausgebildet ist. Im Falle einer Konstruktion mit nur einem Turbinenblatt ist die Primärturbine somit im Gleichgewicht. Es ist dabei vorteilhaft, die Sekundärturbine am Turbinenblatt anzuordnen, da anderenfalls ein umlaufendes Drehmoment entstünde.

Weiterhin können Kreiselkräfte, welche durch die schnelle Drehung der Sekundärturbine auftreten, dadurch kompensiert werden, dass an einem Turbinenblatt zwei gegenläufige Sekundärturbinen ausgebildet sind. Durch die Gegenläufigkeit heben sich die von jeder einzelnen Sekundärturbine erzeugten Kreiselkräfte auf. Die gleiche Wirkung wird erzielt, indem an einem Turbinenblatt sowohl eine Sekundärturbine als auch ein angetriebener gegenläufiger Kreisel ausgebildet sind. Der Kreisel kann kleiner und leichter als eine zweite Sekundärturbine sein. Seine Rotationsachse ist vorzugsweise parallel zur Rotationsachse der Sekundärturbine ausgerichtet. Die wegen der geringeren Masse auftretenden geringeren Kreiselkräfte werden in diesem Falle durch eine höhere Rotationsgeschwindigkeit des Kreisels an die durch die Sekundärturbine verursachten Kreiselkräfte angepasst.

Um sicher zu stellen, dass die die Hydraulikpumpe antreibende Sekundärturbine jederzeit die optimale Anströmgeschwindigkeit bzw. Relativgeschwindigkeit v_{rel,2} erfährt, besteht eine vorteilhafte Ausprägung darin, dass die Sekundärturbine schwenkbar ist. Dadurch wird erreicht, dass neben der tangentialen Rotationsrichtung um die Primärturbinenachse auch die Windströmung längs der Primärturbinenachse genutzt wird, weil die höchstmögliche Anströmgeschwindigkeit in einer Kombination von Rotationsrichtung und Rotationsgeschwindigkeit sowie Windrichtung und Windgeschwindigkeit liegt. Bei im Vergleich zur Windgeschwindigkeit hoher Rotationsgeschwindigkeit ist es dabei von Vorteil, dass die Rotationsachse der Sekundärturbine vorwiegend tangential zur Rotationsbewegung ausgerichtet ist. Bei einer im Vergleich zur Rotationsgeschwindigkeit zunehmenden Windgeschwindigkeit führt eine Verschwenkung in die Richtung des anströmenden Windes zu einer erhöhten Anströmgeschwindigkeit.

Zur Vermeidung von das Material überbeanspruchenden und zum Bruch führenden Biegekräften ist es vorteilhaft, dass die Sekundärturbine an einem Turbinenblatt im oder nahe dem Auftriebsschwerpunkt der aerodynamischen Kräfte angeordnet sind. Durch den so erreichbaren großen Rotationsradius wird einerseits eine hohe Rotationsgeschwindigkeit und daher Anströmgeschwindigkeit v_{rel,2} erreicht. Andererseits greift bei dieser Ausbildung die Auftriebskraft gerade an dem Punkt, nämlich dem Auftriebsschwerpunkt, an, an dem die größte Masse positioniert ist. Hierdurch wird eine räumliche Entfernung von Kraftangriff und Masse vermieden, die zu einer Biegebelastung am Turbinenblatt führt.

Es ist vorgesehen, dass die Sekundärturbine von dem Turbinenblatt beabstandet sind, so dass sie die Zirkulation um das Turbinenblatt wenig beeinflussen. Dadurch wird verhindert, dass der Antrieb der Primärturbine durch den Wind behindert wird.

Weiterhin ist es vorteilhaft, dass die Sekundärturbine als Mantelturbine ausgebildet ist, weil die Energieausbeute größer ist als ohne Mantel, und weil die Geräuschentwicklung kleiner ist als ohne Mantel.

In einer weiteren Ausprägung ist die Sekundärturbine in ein Turbinenblatt integriert, dergestalt, dass das Turbinenblatt gleichzeitig die Sekundärturbine behaust. Das hat den Vorteil, dass eine weitere externe Befestigung am Turbinenblatt und ein eigenes Sekundärturbinengehäuse entfallen, wodurch der Materialaufwand verringert wird. Weiterhin werden die hohen Luftströmungsgeschwindigkeiten an der Oberfläche des Turbinenblatts sowie der Druckausgleich zwischen der Vorder- und der Rückseite des Turbinenblatts zum Betrieb der Sekundärturbine genutzt. Durch die Krümmung der Turbinenblattoberfläche ist die Luftstromgeschwindigkeit gegenüber der Rotationsgeschwindigkeit des Turbinenblatts erhöht, was zu einer weiteren Erhöhung der Anströmgeschwindigkeit v_{rel,2} an der Sekundärturbine führt.

Zur weiteren Erhöhung der Anströmgeschwindigkeit v_{rel,2} ist vorgesehen, dass vor der Lufteintrittsöffnung der Sekundärturbine ein Anströmtrichter ausgebildet ist. Durch den Anströmtrichter wird die Luft aus einer größeren Fläche gesammelt und an die Sekundärturbine weitergeleitet, wodurch die Anströmgeschwindigkeit v_{rel,2} effektiv erhöht wird. Bei einer in ein Turbinenblatt integrierten Sekundärturbine ist der Anströmtrichter dergestalt realisiert, dass eine über die Turbinenblattoberfläche ragende in Rotationsrichtung offene Klappe, insbesondere mit Seitenwänden, ausgebildet ist.

Ein effektiver Schutz vor Zerstörung der Sekundärturbine durch überhöhte Drehzahlen wird dadurch erreicht, dass die Lufteintrittsöffnung der Sekundärturbine mittels einer verschiebbaren Abdeckplatte verschließbar ist. Hierdurch wird der Luftstrom in der Sekundärturbine abgeschnitten und auf einfache Weise ein Stillstand der Sekundärturbine herbeigeführt. Die verschiebbaren Abdeckplatten können bei regelbarer teilweiser Abdeckung der Sekundärturbinenöffnung auch zur Regelung der Anströmgeschwindigkeit v_{rel,2} bzw. des Andrängvolumens an der Sekundärturbine benutzt werden, wodurch sich ein Regelungsmechanismus für die Leistungsausgabe der Sekundärturbine und Hydraulikpumpe ergibt. Im Falle einer in ein Turbinenblatt integrierten Sekundärturbine mit einem als über die Turbinenblattoberfläche ragende in Rotationsrichtung offene Klappe ausgebildeten Anströmtrichter ist es sinnvoll zur Regelung des Luftstroms in die Turbine, dass die Klappe ganz oder teilweise in die Turbinenblattoberfläche versenkbar ist.

Eine vorteilhafte Ausbildung der Erfindung besteht darin, dass in der Sekundärturbine ein Leitrad ausgebildet ist. Durch die Drehung der Turbinenblätter in der Sekundärturbine wird die durch die Sekundärturbine strömende Luft in eine Rotationsbewegung versetzt. Die Rotationsenergie der Luft entweicht ungenutzt. Durch die Anordnung eines Leitrads in der Sekundärturbine wird der durchströmenden Luft zumindest ein Teil der Rotationsenergie entzogen und in eine Vortriebsenergie für die Sekundärturbine umgesetzt. Ein Leitrad kann feststehend oder drehend ausgebildet sein.

Zur Regelung der Windkraftanlage ist vorgesehen, dass das Turbinenblatt um seine Längsachse schwenkbar ist. Durch das Schwenken des Turbinenblatts lässt sich die Rotationsgeschwindigkeit der Primärturbine effektiv regeln. Für die Regelung der Rotationsgeschwindigkeit ist eine Regelungsvorrichtung vorgesehen, die abhängig von der Windgeschwindigkeit die Turbinenblattneigung einstellt. Hierdurch wird die für jede Windgeschwindigkeit optimale Einstellung der Rotationsgeschwindigkeit der Primärturbine bewirkt.

Eine Ausbildung der Windkraftanlage stellt eine Flexibilisierung der Primärturbinenbefestigung dergestalt dar, dass Primärturbinenkopf und Primärturbinenachse durch ein Kardangelenk verbunden sind. Vorteilhaft ist es dabei, dass die Primärturbine auf der windabgewandten Seite des Turms positionierbar ist. In dieser Ausführung richtet sich die Primärturbine selbständig nach dem Wind aus und stabilisiert sich durch die Rotation um die Primärturbinenachse. Eine selbsttätige Nachführung der Primärturbine nach der Windrichtung wird so erleichtert.

In einer Weiterbildung wird die Nachführung des Turmkopfes zur Windrichtung dadurch bewirkt, dass der Turmkopf profiliert ausgebildet ist. Das Profil bewirkt, dass der Turmkopf sich so in den Wind dreht, dass er dem Wind die kleinste Angriffsfläche darbietet, dergestalt, dass die Primärturbine dem Wind die größte Angriffsfläche bietet. Dabei ist die Windkraftanlage vorteilhaft so ausgebildet, dass der Turmkopf auf dem Turm um die Längsachse des Turms schwenkbar ist.

Alternativ oder zusätzlich zur Profilierung des Turmkopfes ist es von Vorteil, dass der Turm profiliert ausgebildet ist. Dabei ist die Windkraftanlage so ausgeführt, dass der Turm um seine Längsachse drehbar ist. Dank seiner großen Oberfläche unterstützt der so profilierte Turm die Ausrichtung der Primärturbine nach der Windrichtung sehr wirkungsvoll. Dabei kann der Turmkopf ebenfalls profiliert sein und den Effekt verstärken. Die Profilierung des Turmes hat den weiteren Vorteil, dass eine Schwingungsanregung vermieden wird, die bei rundem Turmprofil dadurch entsteht, dass Wirbel sich abwechselnd an den Seiten ablösen.

Für die Positionierung der die Hydraulikpumpe antreibenden Sekundärturbine und der Hydraulikpumpe selber auf einem Turbinenblatt ist es vorteilhaft, dass hydraulische Zu- und Ableitungen in der Primärturbine mit hydraulischen Zu- und Ableitungen im Turmkopf über eine hydraulische Rotationskupplung gekoppelt sind. Dabei erleichtert eine Lösbarkeit der Kopplung insbesondere die Abschaltung der Turbinen im Notfall und für Wartungsarbeiten.

Weiterhin ist eine Windkraftanlage so ausgebildet, dass hydraulische Zu- und Ableitungen im Turmkopf mit hydraulischen Zu- und Ableitungen im Turm über eine hydraulische Rotationskupplung gekoppelt sind. Durch eine Lösbarkeit erleichtert sich die Wartung. Durch die Rotationskupplung ist eine beliebige Drehung des Turmkopfes um die Turmlängsachse gewährleistet.

Für den Betrieb der Windkraftanlage bei wechselnden Windbedingungen kann sie so ausgebildet sein, dass eine Vorrichtung zur last-und/oder drehzahlabhängigen Steuerung der Turbinenblattstellung vorgesehen ist. Hierdurch lässt sich die Energieausbeute windgeschwindigkeitsabhängig optimal steuern und im Notfall oder Wartungsfall die Rotorbewegung ggf. bis zum Stillstand reduzieren.

Eine sinnvolle Ausbildung der Windkraftanlage sieht vor, dass durch die Windkraftanlage ein hydraulischer Verbraucher betrieben wird. Dadurch wird es ermöglicht, Windenergie in verschiedene andere Energieformen umzuwandeln, wie anhand einiger Beispiele im Folgenden dargelegt ist.

Verschiedene Systeme sind als hydraulische Verbraucher denkbar. In einer Ausbildung ist vorgesehen, dass der hydraulische Verbraucher als Stromgenerator ausgebildet ist. So lässt sich mit nur geringen Verlusten die windgetriebene hydraulische Arbeit in elektrischen Strom umwandeln. Der produzierte Strom kann insbesondere in ein Stromnetz eingespeist werden, gespeichert oder zum Betrieb eines einzelnen elektrischen Verbrauchers oder einer elektrischen Verbraucheranlage genutzt werden. Weiterhin ist vorgesehen, dass der hydraulische Verbraucher als Wasserpumpe ausgebildet ist. Diese kann zur Landentwässerung oder zur Verbringung von Wasser auf ein höheres Niveau genutzt werden. Eine weitere vorteilhafte Ausprägung besteht darin, dass ein hydraulischer Verbraucher als Wärmeerzeuger, insbesondere zum Anschluss an ein Fernwärmenetz, ausgebildet ist. Die produzierte Wärme kann aber auch zum Beheizen von Gebäuden oder zur Speicherung, insbesondere im Grund zur späteren Nutzung, verwendet werden.

Ein Vorteil für die Reduzierung der Turmkopfmasse wird dadurch erzielt, dass der hydraulische Verbraucher erdständig oder wenigstens teilweise unterirdisch angeordnet ist. Dadurch wird der Turm um die, teilweise erhebliche, Masse des Verbrauchers erleichtert, wodurch sich die Anforderungen an die Turmsteifigkeit wesentlich reduzieren und höhere Rotationsgeschwindigkeiten ermöglicht werden.

Zum Schutz der Windkraftanlage vor Überlast und vor Überlastung der hydraulischen Systeme ist vorgesehen, dass in wenigstens einer hydraulischen Leitung ein, insbesondere regelbares, Ventil ausgebildet ist. Bei Aufbau eines übermäßigen Druckes in den Leitungen lässt sich dann der Überschussdruck durch das Ventil reduzieren. Dabei ist es für die Wiederverwendung der hydraulischen Flüssigkeit sinnvoll, dass ein Überlaufbehälter vorgesehen ist, in dem die durch das Überdruckventil abgelassene Hydraulikflüssigkeit aufgefangen wird und von wo aus sie in die hydraulischen Zu- oder Ableitungen wieder eingebracht wird.

In einer Weiterbildung ist die Windkraftanlage derart ausgebaut, dass in wenigstens einer hydraulischen Leitung ein, insbesondere regelbares, Drosselelement ausgebildet ist. Dadurch kann die Leistungsaufnahme von der Hydraulikpumpe geregelt werden, oder es kann das hydraulische System zur Stabilisierung der Rotationsgeschwindigkeit der Sekundärturbine benutzt werden.

Zur Sicherung der erfindungsgemäßen Windkraftanlage ist vorgesehen, dass eine hydraulische und/oder mechanische Bremse für die Primärturbine ausgebildet ist. Diese Bremse greift insbesondere an der Primärturbinenachse an und wird bei übermäßiger Drehzahl angewandt, um die Sicherheit der Windkraftanlage zu gewährleisten oder die Primärturbine zu stoppen.

Zur Sicherung der Sekundärturbine trägt weiterhin bei, dass eine hydraulische und/oder mechanische Bremse für die Sekundärturbine vorgesehen ist. Die Bremsen verhindern, dass die Sekundärturbine in einen gefährlich hohen Drehzahlbereich gerät.

Bei größeren Windkraftanlagen ist es wichtig, die erhebliche Geräuschentwicklung einzudämmen. Dafür ist vorgesehen, dass das Turbinenblatt mit negativer Pfeilung ausgebildet ist. Die negative Pfeilung besteht aus einer an der Turbinenblattspitze ausgebildeten Ausformung des Turbinenblattes in Richtung der Rotationsbewegung. Die Ausformung reduziert die sonst an der Turbinenblattspitze entstehenden Turbulenzen und verringert so den Geräuschpegel bei sehr geringem Materialaufwand und unerheblicher Effizienzminderung ganz erheblich. Da der Geräuschpegel einen der begrenzenden Faktoren für die im Betrieb erreichbare Drehgeschwindigkeit der Primärturbine darstellt, dient diese Maßnahme zur Erhöhung der Drehgeschwindigkeit der Primärturbine und somit zur Steigerung der Energieumwandlungseffizienz.

Im Rahmen der Sturmsicherung ist in einer Weiterbildung der Windkraftanlage vorgesehen, dass der Turmkopf als eine um 45° zwischen Turmlängsachse und Primärturbinenachse gedrehte Schrägachse ausgebildet ist, welche um ihre Längsachse derart um 180° drehbar ist, dass die Primärturbinenachse in eine vertikale Ruheposition bringbar ist. Insbesondere in der Ausprägung mit einem Turbinenblatt bewirkt die Drehung um die Schrägachse, dass die Primärturbine, insbesondere durch einen Motorantrieb, in eine horizontale Position gebracht wird und das Turbinenblatt im Wind auspendelt. Die dem Wind dargebotene Oberfläche wird auf einen Bruchteil der im Normalbetrieb bei horizontaler Primärturbinenachse dargebotenen Oberfläche reduziert, wodurch die Bruchgefahr für das Turbinenblatt sowie die Belastung für die Primärturbinenachse minimiert wird. Weiterhin ist vorgesehen, dass die Schrägachse in der Position mit horizontaler und/oder vertikaler Primärturbinenachsenausrichtung arretierbar ist. Dadurch wird eine stabile Lage in der Betriebslage und in der Ruhelage gewährleistet.

Die Aufgabe wird weiterhin gelöst durch ein Turbinenblatt, insbesondere zur Verwendung in einer Windkraftanlage, das mit einer an eine Hydraulikpumpe anschließbaren Sekundärturbine ausgestattet ist. Das Turbinenblatt kann in einer Windkraftanlage Verwendung finden und wie oben ausgeführt durch Erhöhung der Anströmgeschwindigkeit zur Energieumwandlungseffizienzsteigerung genutzt werden.

Es ist erfindungsgemäß vorgesehen, dass die Windkraftanlage zur Erzeugung von elektrischem Strom verwendet wird, insbesondere zur Einspeisung in ein Stromnetz, aber auch im Inselbetrieb zum Betrieb eines allein stehenden Gerätes oder einer allein stehenden Anlage.

Es ist auch denkbar, dass die Windkraftanlage zum Pumpen von Wasser verwendet wird, insbesondere zur Landentwässerung oder zur Verdrängung von Wasser auf ein höheres Niveau. Das bietet die Möglichkeit zur Energiespeicherung, indem z.B. Wasser in ein höher gelegenes Reservoir verbracht wird, von wo aus es zur Stromerzeugung oder sonstigen Energiegewinnung wieder abgelassen werden kann. Auch die Befüllung von Wassertanks ist denkbar als Verwendung dieser Windkraftanlage.

Ferner ist die Verwendung der Windkraftanlage zur Erzeugung von Wärme insbesondere zur Einspeisung in ein Fernwärmenetz vorgesehen, aber auch zur Speicherung in Boden oder zur Heizung von Gebäuden. Eine derartige Speicherung der gewonnenen Energie ist eine sinnvolle Ergänzung der Windkraft, die tages- und jahreszeitliche Schwankungen aufweist.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1a: eine schematische Seitenansicht einer erfindungsgemäßen Windkraftanlage,
- Fig. 1b: eine schematische Querschnittsansicht einer Sekundärturbine entlang der Schnittlinie C-C in Fig. 1a,
- Fig. 2: eine schematische Darstellung einer Primärturbine mit einem Turbinenblatt,
- Fig. 3: eine schematische Darstellung eines Primärturbinenkopfs mit kardanischer Aufhängung an der Primärturbinenachse,
- Fig.4: eine schematische Darstellung eines Turmkopfs mit Schrägachse mit vertikaler Ruheposition der Primärturbinenachse,
- Fig. 5: eine schematische Darstellung eines Turmkopfs mit Schrägachse mit horizontaler Betriebsposition der Primärturbinenachse.

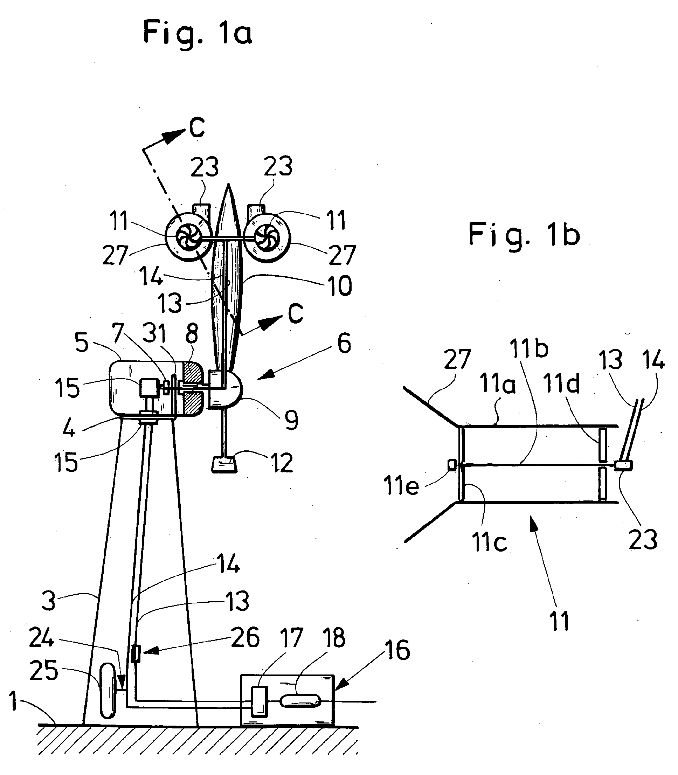

In Fig. 1a ist eine Seitenansicht einer Windkraftanlage 2 im Querschnitt schematisch dargestellt. Diese besteht im Wesentlichen aus einem Turm 3, auf welchem auf einer Turmkopflagerung 4 ein Turmkopf 5 um die Längsachse des Turms 3 drehbar lagert, der eine Lagerung 8 für die Primärturbinenachse 7 umfasst, in welcher die Primärturbinenachse 7 lagert. Zur Abbremsung der Rotation der Primärturbine 6 bei übermäßiger Rotationsgeschwindigkeit ist die Primärturbinenachse 7 mit einer hydraulischen und/oder mechanischen Bremse 31 ausgestattet. Der Primärturbinenkopf 9 ist verbunden mit einem Turbinenblatt 10 und einem Gegengewicht 12.

In diesem Beispiel ist das Turbinenblatt 10 versehen mit zwei gegenläufigen Sekundärturbinen 11. Die Sekundärturbinen 11 treiben zwei Hydraulikpumpen 23 an, welche über hydraulische Zu-13 und Ableitungen 14 einen hydraulischen Verbraucher 16, bestehend aus einem Abnehmer 17 und einem Generator 18, antreiben. Zur Vergrößerung des an die Sekundärturbinen 11 anströmenden Luftvolumens und dadurch der Anströmgeschwindigkeit sind die Sekundärturbinen 11 mit Anströmtrichtern 27 ausgestattet, welche in Rotationsrichtung 19 der Primärturbine 6 geöffnet sind. Die gezeigte Anordnung der Sekundärturbinen 11 in Gehäusen, welche von dem Turbinenblatt 10 beabstandet sind, bietet den Vorteil, dass der Luftstrom um das Turbinenblatt 10 wenig beeinflusst wird. Weiterhin wird die Energieumwandlung von einer seitlich geschlossenen Sekundärturbine 11 effektiver verrichtet als von einer offenen Sekundärturbine 11.

Die Übertragung der hydraulischen Flüssigkeit geschieht über zwei hydraulische Rotationskupplungen 15 im Turmkopf 5 und im Turmkopflager 4. Der hydraulische Verbraucher 16 ruht auf der Erde 1 und belastet somit den Turm 3 nicht.

Die Sekundärturbinen 11 werden durch die Rotation der Primärturbine 6 mit einer höheren Anströmgeschwindigkeit v_{rel,2} als der Windgeschwindigkeit des Windes v_{rel,1} angetrieben. Da die Energieübertragung über ein hydraulisches System erfolgt, ist das Gewicht der Komponenten klein gegenüber dem Gewicht vergleichbarer Komponenten bei mechanischer und elektrischer Energieübertragung. Durch die gegenüber herkömmlichen Windkraftanlagen stark reduzierte Turmlast ist die Drehung der Primärturbine 6 auch bei höheren Drehgeschwindigkeiten noch stabil.

Schutz vor Überdruck bietet ein hydraulisches Ventil 24 in einer hydraulischen Zu- 13 oder Ableitung 14, welches bei Auftreten eines Überdrucks den Druck im hydraulischen System dadurch reduziert, dass es hydraulische Flüssigkeit in ein Überlaufgefäß 25 ableitet, aus welchem die hydraulische Flüssigkeit nach Abklingen des Drucks unter einen vorgebbaren sicheren Wert wieder in das hydraulische System einleitbar ist.

Zur Steuerung der Hydraulik ist eine der hydraulischen Zu- 13 oder Ableitungen 14 mit einem steuerbaren Drosselelement 26 ausgestattet, welches es erlaubt, die Strömung der hydraulischen Flüssigkeit zu steuern. Dadurch kann der hydraulische Verbraucher 16 lastabhängig angesteuert werden. Das Drosselelement 26 kann auch als hydraulische Bremse 32 für die Hydraulikpumpe 23 genutzt werden.

Durch die Positionierung der Sekundärturbinen 11 und Hydraulikpumpen 23 am Turbinenblatt 10 wird eine erhöhte Anströmgeschwindigkeit v_{rel,2} erreicht. Die durch die mit der dritten Potenz der erhöhten Anströmgeschwindigkeit v_{rel,2} an der Sekundärturbine 11 erhöhte zur Umwandlung bereitstehende Energie überwiegt die Verkleinerung der wirksamen Oberfläche der von der Primärturbine 6 überstrichenen Fläche.

Fig. 1b zeigt eine schematische Querschnittsansicht einer Sekundärturbine 11 entlang der Schnittlinie C-C in Fig. 1a. Die Sekundärturbinenwandung 11a ist mit einem Anströmtrichter 27 verbunden, der für eine Kompression des eintretenden Luftstroms sorgt. In einer Sekundärturbinenachsenlagerung 11e ist die Sekundärturbinenachse 11b aufgehängt. Am anderen Ende ist sie mit der Hydraulikpumpe 23 verbunden, die mit hydraulischen Zu- und Ableitungen 13, 14 versehen ist. Am Eingang der Sekundärturbine 11 befinden sich Sekundärturbinenblätter 11c, die im anströmenden Luftzug rotieren und über die Sekundärturbinenachse 11b die Hydraulikpumpe 23 antreiben. Vor dem Ausgang der Sekundärturbine 11 befindet sich ein Leitrad 11d, das die rotierende Luft im Innern der Sekundärturbine 11 Rotationsenergie entzieht und sie in einen tangentialen Schub verwandelt.

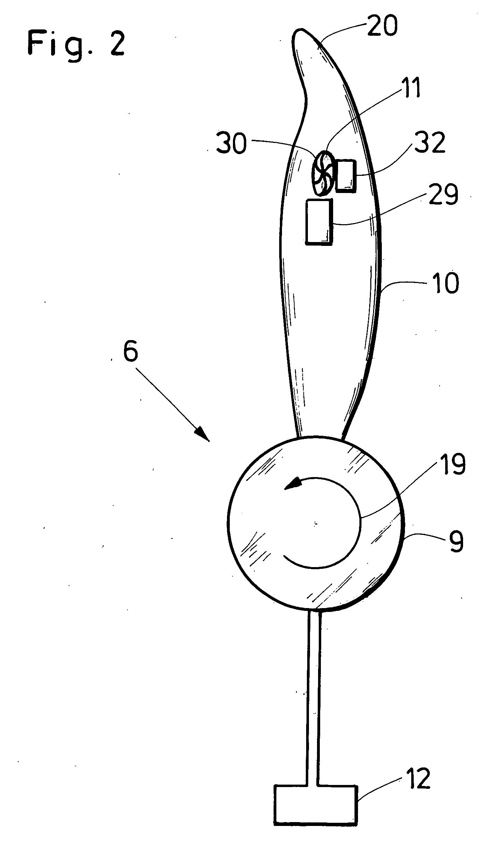

Fig. 2 zeigt eine Primärturbine 6 mit einer in ein Turbinenblatt 10 integrierten Sekundärturbine 11, verschiebbarer Abdeckplatte 29 für die Lufteintrittsöffnung 30 der Sekundärturbine 11, hydraulischer und/oder mechanischer Bremse 32 für die Sekundärturbine, gegenläufigem angetriebenen Kreisel 28, einen Primärturbinenkopf 9 und ein Gegengewicht 12 in schematischer Darstellung. Das Turbinenblatt 10 ist mit negativer Pfeilung 20 an der Turbinenblattspitze ausgebildet. Die negative Pfeilung 20 besteht aus einer Ausformung der Spitze des Turbinenblatts 10 in Rotationsrichtung 19. Sie reduziert die Bildung von Turbulenzen an der Turbinenblattspitze und führt so zu einer erheblichen Reduzierung der Geräuschentwicklung.

In der gezeigten Anordnung ist eine Sekundärturbine 11 in das Turbinenblatt 10 integriert. Dadurch dient das Turbinenblatt 10 als Gehäuse für die Sekundärturbine 11. Die Rotationsachse der Sekundärturbine 11 kann dabei schräg oder senkrecht zu der Oberfläche des Turbinenblatts 10 stehen. Die schräge Ausrichtung der Rotationsachse der Sekundärturbine 11 zum Turbinenblatt 10 sichert eine gute Ausrichtung der Sekundärturbine 11 zur Rotationsrichtung. Eine zum Turbinenblatt 10 senkrechte Ausrichtung der Rotationsachse der Sekundärturbine 11 verhindert Kreiselkräfte, die dadurch auftreten, dass die sich drehende Sekundärturbine 11 sich mit dem Turbinenblatt 10 um die Primärturbinenachse 7 dreht, da in dieser Konfiguration die Drehachsen von Primärturbine 6 und Sekundärturbine 11 parallel sind. Weiterhin wirkt ein angetriebener gegenläufiger Kreisel 28 stabilisierend. Der Kreisel 28 ist so angetrieben, dass das durch ihn erzeugte Drehmoment dem durch die Sekundärturbine 11 erzeugten Drehmoment entgegengerichtet ist und es aufhebt.

Durch die Integration der Sekundärturbine 11 in das Turbinenblatt 10 lässt sich die hohe Luftströmgeschwindigkeit an der gebogenen Oberfläche des Turbinenblatts 10 zum Betrieb der Sekundärturbine 11 nutzen. Hinzu kommt der Druckausgleich, der zwischen der Vorder- und der Rückseite des sich durch die Luft bewegenden Turbinenblatts 10 stattfindet. Weiterhin entfällt eine aufwändige externe Aufhängung der Sekundärturbine 11 und Hydraulikpumpe 23 am Turbinenblatt 10. Das Turbinenblatt 10 kann schwenkbar am Primärturbinenkopf 9 aufgehängt sein, so dass über eine Steuerungsvorrichtung die Rotationsgeschwindigkeit der Primärturbine 6 gesteuert werden kann.

Durch die vor die Lufteintrittsöffnung 30 der Sekundärturbine 11 verschiebbare Abdeckplatte 29 lässt sich der Luftstrom in die Sekundärturbine 11 regulieren und auch gänzlich unterbinden. Somit ergibt sich ein effektives Mittel, die Sekundärturbine 11 bei Überlastsituationen auf eine sichere Rotationsgeschwindigkeit zu regeln. Eine weitere Regelung der Rotationsgeschwindigkeit der Sekundärturbine 11 ergibt sich aus der Ausbildung einer hydraulischen und/oder mechanischen Bremse 32 für die Sekundärturbine 11.

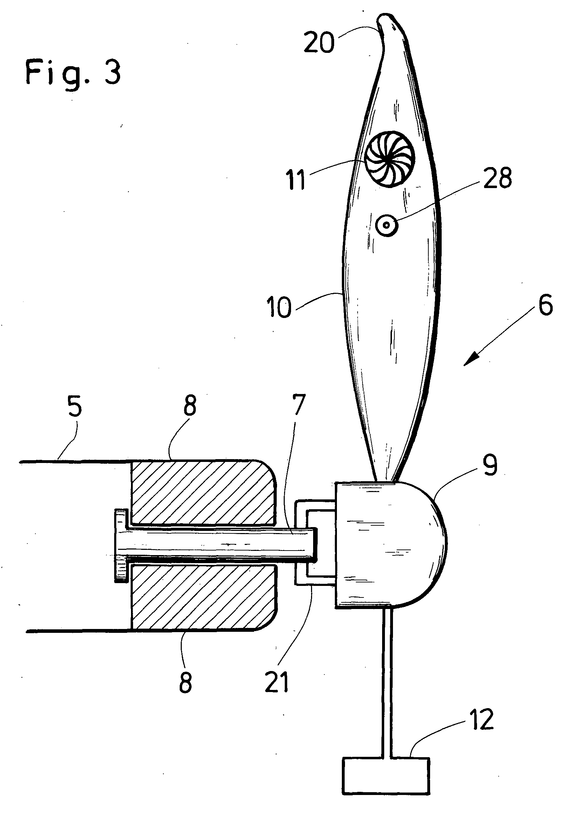

Fig. 3 zeigt schematisch einen Primärturbinenkopf 9, welcher mit einem Kardangelenk 21 mit der Primärturbinenachse 7 verbunden ist. Am Primärturbinenkopf 9 sind ein Turbinenblatt 10 mit integrierter Sekundärturbine 11 und negativer Pfeilung 20 sowie ein Gegengewicht 12 ausgebildet. Das Kardangelenk 21 gewährt eine große Freiheit für die Ausrichtung der Primärturbine 6 auf den Wind.

Schon bei geringen Rotationsgeschwindigkeiten stabilisiert sich die Ausrichtung der Primärturbine 6 selbst.

Die Verbindung von Primärturbinenkopf 9 mit der Primärturbinenachse 7 über ein Kardangelenk 21 ist insbesondere vorteilhaft in Verbindung mit einer leeläufigen, d.h. dem Wind abgewandten Primärturbine 6. In diesem Fall wirkt die Primärturbine 6 wie eine Windfahne zur Ausrichtung des Turmkopfs 5, indem die großflächige Primärturbine 6 den Wind fängt und über das Kardangelenk 21 und die Primärturbinenachse 7 den Turmkopf 5 hinter sich herzieht.

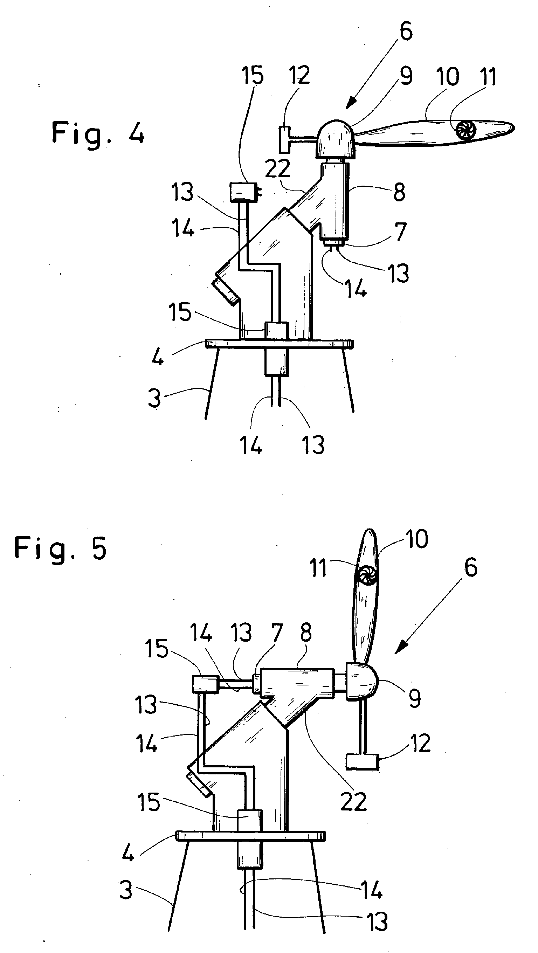

Fig. 4 zeigt schematisch einen Turmkopf 5, umfassend eine Schrägachse 22 in der vertikalen Ruheposition der Primärturbinenachse 7. Der Turmkopf 5 ist um die Längsachse des Turms 3 auf der Turmkopflagerung 4 gelagert. Die Turmkopflagerung 4 ist mit einer hydraulischen Rotationskupplung 15 zur Durchführung der hydraulischen Zu- 13 und Ableitungen 14 versehen. Die Schrägachse 22 umfasst eine Primärturbinenachsenlagerung 8, in welcher die Primärturbinenachse 7 drehbar gelagert ist.

An der Primärturbinenachse 7 befestigt ist ein Primärturbinenkopf 9 mit einem Gegengewicht 12 und einem Turbinenblatt 10, in welchen eine Sekundärturbine 11 und eine durch die Sekundärturbine 11 angetriebene Hydraulikpumpe 23 integriert sind. Hydraulische Zu-13 und Ableitungen 14 werden durch das Turbinenblatt 10, den Primärturbinenkopf 9 und die Primärturbinenachse 7 geführt.

In der in Fig. 4 dargestellten Ruheposition sind die aus der Primärturbinenachse 7 austretenden hydraulischen Zu- 13 und Ableitungen 14 von der ersten hydraulischen Rotationskupplung 15 abgekoppelt, da die Primärturbinenachse 7 über die Primärturbinenachsenlagerung 8 und die Schrägachse 22 von dieser weggedreht ist. In dieser Ruhelage bietet das Turbinenblatt 10 dem Wind die geringste Angriffsfläche. Die Primärturbine 6 kann in dieser Position mit windabgewandtem Turbinenblatt 10 auspendeln.

In Fig. 5 ist schematisch die gleiche Konstruktion dargestellt wie in Fig. 4, jedoch in diesem Fall mit der Primärturbinenachse 7 in seiner horizontalen Betriebsposition. Die Primärturbinenachsenlagerung 8, welche mit der Schrägachse 22 verbunden ist, ist durch eine Drehung der Schrägachse 22 um 180° um die Längsachse der Schrägachse 22 von der vertikalen Ruheposition in die horizontale Betriebsposition gebracht worden. Dabei sind die hydraulischen Zu- 13 und Ableitungen 14, welche in der in Fig. 4 dargestellten vertikalen Ruheposition der Primärturbinenachse 7 von der hydraulischen Rotationskupplung 15 abgekoppelt sind, in Fig. 5 in der horizontalen Betriebsposition der Primärturbinenachse 7 an die Rotationskupplung 15 angekoppelt. Der Übergang zwischen der in Fig. 5 dargestellten Betriebsposition und der in Fig. 4 dargestellten Ruheposition erfolgt zweckmäßigerweise nach vollständigem Halt der Primärturbine 6, um bei der Drehung der Primärturbinenachse 7 der sich drehenden Primärturbine 6 auftretende Kreiselkräfte zu vermeiden.

### Bezugszeichenliste

- 1: Untergrund
- 2: Windkraftanlage
- 3: Turm
- 4: Turmkopflagerung
- 5: Turmkopf
- 6: Primärturbine
- 7: Primärturbinenachse
- 8: Primärturbinenachsenlagerung
- 9: Primärturbinenkopf
- 10: Turbinenblatt
- 11: Sekundärturbine
- 11a: Sekundärturbinenwandung
- 11b: Sekundärturbinenachse
- 11c: Sekundärturbinenblatt
- 11d: Leitrad
- 11e: Sekundärturbinenachsenlagerung
- 12: Gegengewicht
- 13: hydraulische Zuleitung
- 14: hydraulische Ableitung
- 15: hydraulische Rotationskupplung
- 16: hydraulischer Verbraucher
- 17: Abnehmer
- 18: Generator
- 19: Rotationsrichtung
- 20: negative Pfeilung
- 21: Kardangelenk
- 22: Schrägachse
- 23: Hydraulikpumpe
- 24: hydraulisches Ventil
- 25: Überlaufgefäß
- 26: Drosselelement
- 27: Anströmtrichter
- 28: angetriebener Kreisel
- 29: verschiebbare Abdeckplatte
- 30: Lufteintrittsöffnung
- 31: hydraulische und/oder mechanische Primärturbinenbremse
- 32: hydraulische und/oder mechanische Sekundärturbinenbremse

## Patentansprüche

1. Windkraftanlage (2), umfassend einen Turm (3) mit einem Turmkopf (5), mit einer durch Wind antreibbaren Primärturbine (6), umfassend eine horizontale Primärturbinenachse (7) und wenigstens ein Turbinenblatt (10), das über einen Primärturbinenkopf (9) mit der Primärturbinenachse (7) verbunden ist, **dadurch gekennzeichnet, dass** eine Sekundärturbine (11) vorgesehen ist.

2. Windkraftanlage (2) nach Anspruch 1, **dadurch gekennzeichnet, dass** die Sekundärturbine (11) mit einer Hydraulikpumpe (23) verbunden ist.

3. Windkraftanlage (2) nach einem oder mehreren der Ansprüche 1 und 2, **dadurch gekennzeichnet, dass** zusätzlich zu einem Turbinenblatt (10) ein Gegengewicht (12) ausgebildet ist.

4. Windkraftanlage (2) nach einem oder mehreren der Ansprüche 1 bis 3, **dadurch gekennzeichnet, dass** an einem Turbinenblatt (10) zwei gegenläufige Sekundärturbinen (11) ausgebildet sind.

5. Windkraftanlage (2) nach einem oder mehreren der Ansprüche 1 bis 4, **dadurch gekennzeichnet, dass** an einem Turbinenblatt (10) sowohl eine Sekundärturbine (11) als auch ein angetriebener gegenläufiger Kreisel (28) ausgebildet sind.

6. Windkraftanlage (2) nach einem oder mehreren der Ansprüche 1 bis 5, **dadurch gekennzeichnet, dass** die Sekundärturbine (11) schwenkbar ist.

7. Windkraftanlage (2) nach einem oder mehreren der Ansprüche 1 bis 6, **dadurch gekennzeichnet, dass** die Sekundärturbine (11) an einem Turbinenblatt (10) im oder nahe dem Auftriebsschwerpunkt der aerodynamischen Kräfte angeordnet ist.

8. Windkraftanlage (2) nach einem oder mehreren der Ansprüche 1 bis 7, **dadurch gekennzeichnet, dass** die Sekundärturbine (11) von dem Turbinenblatt (10) beabstandet ist.

9. Windkraftanlage (2) nach einem oder mehreren der Ansprüche 1 bis 8, **dadurch gekennzeichnet, dass** die Sekundärturbine (11) als Mantelturbine ausgebildet ist.

10. Windkraftanlage (2) nach einem oder mehreren der Ansprüche 1 bis 9, **dadurch gekennzeichnet, dass** die Sekundärturbine (11) in ein Turbinenblatt (10) integriert ist.

11. Windkraftanlage (2) nach einem oder mehreren der Ansprüche 1 bis 10, **dadurch gekennzeichnet, dass** vor der Lufteintrittsöffnung (30) der Sekundärturbine (11) ein Anströmtrichter (27) ausgebildet ist.

12. Windkraftanlage (2) nach einem oder mehreren der Ansprüche 1 bis 11, **dadurch gekennzeichnet, dass** die Lufteintrittsöffnung (30) der Sekundärturbine (11) mittels einer verschiebbaren Abdeckplatte (29) verschließbar ist.

13. Windkraftanlage (2) nach einem oder mehreren der Ansprüche 1 bis 12, **dadurch gekennzeichnet, dass** in der Sekundärturbine (11) ein Leitrad (11d) ausgebildet ist.

14. Windkraftanlage (2) nach einem oder mehreren der Ansprüche 1 bis 13, **dadurch gekennzeichnet, dass** das Turbinenblatt (10) um seine Längsachse schwenkbar ist.

15. Windkraftanlage (2) nach einem oder mehreren der Ansprüche 1 bis 14, **dadurch gekennzeichnet, dass** Primärturbinenkopf (9) und Primärturbinenachse (7) mit einem Kardangelenk (21) verbunden sind.

16. Windkraftanlage (2) nach einem oder mehreren der Ansprüche 1 bis 15, **dadurch gekennzeichnet, dass** die Primärturbine (6) auf der windabgewandten Seite des Turmes (3) positionierbar ist.

17. Windkraftanlage (2) nach einem oder mehreren der Ansprüche 1 bis 16, **dadurch gekennzeichnet, dass** der Turmkopf (5) profiliert ausgebildet ist.

18. Windkraftanlage (2) nach einem oder mehreren der Ansprüche 1 bis 17, **dadurch gekennzeichnet, dass** der Turmkopf (5) auf dem Turm (3) um die Längsachse des Turms (3) schwenkbar ist.

19. Windkraftanlage (2) nach einem oder mehreren der Ansprüche 1 bis 18, **dadurch gekennzeichnet, dass** der Turm (3) profiliert ausgebildet ist.

20. Windkraftanlage (2) nach einem oder mehreren der Ansprüche 1 bis 19, **dadurch gekennzeichnet, dass** der Turm (3) um seine Längsachse drehbar ist.

21. Windkraftanlage (2) nach einem oder mehreren der Ansprüche 1 bis 20, **dadurch gekennzeichnet, dass** hydraulische Zu- und Ableitungen (13, 14) in der Primärturbine (6) mit hydraulischen Zu- und Ableitungen (13, 14) im Turmkopf (5) über eine hydraulische Rotationskupplung (15) gekoppelt sind.

22. Windkraftanlage (2) nach einem oder mehreren der Ansprüche 1 bis 21, **dadurch gekennzeichnet, dass** hydraulische Zu- und Ableitungen (13, 14) im Turmkopf (5) mit hydraulischen Zu- und Ableitungen (13, 14) im Turm (3) über eine hydraulische Rotationskupplung (15) gekoppelt sind.

23. Windkraftanlage (2) nach einem oder mehreren der Ansprüche 1 bis 22, **dadurch gekennzeichnet, dass** eine Vorrichtung zur last- und/oder drehzahlabhängigen Steuerung der Turbinenblattstellung vorgesehen ist.

24. Windkraftanlage (2) nach einem oder mehreren der Ansprüche 1 bis 23, **dadurch gekennzeichnet, dass** durch die Windkraftanlage ein hydraulischer Verbraucher (16) betrieben wird.

25. Windkraftanlage (2) nach einem oder mehreren der Ansprüche 1 bis 24, **dadurch gekennzeichnet, dass** der hydraulische Verbraucher (16) als Stromgenerator ausgebildet ist.

26. Windkraftanlage (2) nach einem oder mehreren der Ansprüche 1 bis 25, **dadurch gekennzeichnet, dass** der hydraulische Verbraucher (16) als Wasserpumpe ausgebildet ist.

27. Windkraftanlage (2) nach einem oder mehreren der Ansprüche 1 bis 26, **dadurch gekennzeichnet, dass** der hydraulische Verbraucher (16) als Wärmeerzeuger, insbesondere zum Anschluss an ein Fernwärmenetz, ausgebildet ist.

28. Windkraftanlage (2) nach einem oder mehreren der Ansprüche 1 bis 27, **dadurch gekennzeichnet, dass** der hydraulische Verbraucher (16) erdständig oder wenigstens teilweise unterirdisch angeordnet ist.

29. Windkraftanlage (2) nach einem oder mehreren der Ansprüche 1 bis 28, **dadurch gekennzeichnet, dass** in wenigstens einer hydraulischen Leitung (13, 14) ein, insbesondere regelbares, Ventil (24) ausgebildet ist.

30. Windkraftanlage (2) nach einem oder mehreren der Ansprüche 1 bis 29, **dadurch gekennzeichnet, dass** in wenigstens einer hydraulischen Leitung (13, 14) ein, insbesondere regelbares, Drosselelement (26) ausgebildet ist.

31. Windkraftanlage (2) nach einem oder mehreren der Ansprüche 1 bis 30, **dadurch gekennzeichnet, dass** eine hydraulische und/oder mechanische Bremse (31) für die Primärturbine (6) ausgebildet ist.

32. Windkraftanlage (2) nach einem oder mehreren der Ansprüche 1 bis 31, **dadurch gekennzeichnet, dass** eine hydraulische und/oder mechanische Bremse (32) für die Sekundärturbine (11) vorgesehen ist.

33. Windkraftanlage (2), insbesondere nach einem oder mehreren der Ansprüche 1 bis 32, **dadurch gekennzeichnet, dass** das Turbinenblatt (10) mit negativer Pfeilung (20) ausgebildet ist.

34. Windkraftanlage (2) nach einem oder mehreren der Ansprüche 1 bis 33, **dadurch gekennzeichnet, dass** der Turmkopf (5) eine um 45° zwischen Turmlängsachse und Primärturbinenachse (7) gedrehte Schrägachse (22) umfasst, welche um ihre Längsachse derart um 180° drehbar ist, dass die Primärturbinenachse (7) in eine vertikale Ruheposition bringbar ist.

35. Windkraftanlage (2) nach Anspruch 34, **dadurch gekennzeichnet, dass** die Schrägachse (22) in der Position mit horizontaler und/oder vertikaler Ausrichtung der Primärturbinenachse (7) arretierbar ist.

36. Turbinenblatt (10), insbesondere zur Verwendung in einer Windkraftanlage nach einem oder mehreren der Ansprüche 1 bis 35, **dadurch gekennzeichnet, dass** das Turbinenblatt (10) mit einer Sekundärturbine (11) ausgestattet ist.

37. Verwendung einer Windkraftanlage (2), insbesondere nach einem oder mehreren der Ansprüche 1 bis 35, zur Erzeugung von elektrischem Strom, insbesondere zur Einspeisung von Strom in ein Stromnetz.

38. Verwendung einer Windkraftanlage (2), insbesondere nach einem oder mehreren der Ansprüche 1 bis 35, zum Pumpen von Wasser, insbesondere zur Landentwässerung oder zur Verbringung von Wasser auf ein höheres Niveau.

39. Verwendung einer Windkraftanlage (2), insbesondere nach einem oder mehreren der Ansprüche 1 bis 35, zur Erzeugung von Wärme, insbesondere zur Einspeisung in ein Fernwärmenetz, zur Speicherung oder zur Heizung von Gebäuden.
